# EUROPÄISCHE PATENTANMELDUNG

(11) **EP 1 935 692 A2**
(43) Veröffentlichungstag der Anmeldung: **25.06.2008**
(21) Anmeldenummer: 07022439.9
(22) Anmeldetag: 20.11.2007
(51) Int. Cl.: B60J 7/20, B60J 7/12

(54) **Übertotpunktverbindungsmechnismus für eine Heckklappe eines Automobils**

(30) Priorität: 21.12.2006 US 614547
(71) Anmelder: Wilhelm Karmann GmbH, 49084 Osnabrück (DE)
(72) Erfinder: Neubrand, Frank, West Bloomfield Michigan 48322 (US); Ferraiuolo, Matt, Pittsford Michigan 49271 (US)

(57) **Zusammenfassung**

Ein Heckklappenverbindungsmechanismus erlaubt die Bewegung einer Heckklappe (10) relativ zu einer Karosserie eines Automobils. Der Heckklappenverbindungsmechanismus umfasst einen Rahmen (14), eine Stelleinheit (40) und einen Verbindungsmechanismus (12). Der Rahmen (14) stützt zumindest einen Teil der Heckklappe (10). Für die Bewegung des Rahmens (14) zusammen mit der Heckklappe (10) zwischen einer geschlossenen Position, die einen Stauraum in dem Fahrzeug verdeckt, und einer ersten offenen Position, die den Zugang zum Stauraum über eine erste Seite des Stauraums ermöglicht, ist der Rahmen (14) schwenkbar mit der Karosserie verbunden. Für die Bewegung der Heckklappe (10) zwischen der geschlossenen Position und einer zweiten offenen Position, die den Zugang zum Stauraum über eine zweite Seite des Stauraums, die der ersten Seite gegenüberliegt, ermöglicht, ist die Heckklappe (10) mit dem Rahmen (14) verbunden. Die Stelleinheit (40) bewegt die Heckklappe(10) zwischen der geschlossenen Position und der ersten offenen Position. Der Verbindungsmechanismus (12) umfasst eine Übertotpunkteinrichtung, die die Heckklappe (10) in der geschlossenen Position arretiert.

## Beschreibung

Die Erfindung bezieht sich auf Heckklappen für Automobile. Im Besonderen bezieht sich die Erfindung auf einen Übertotpunktverbindungsmechanismus, mit dem eine Heckklappe entweder in einer geschlossenen oder einer offenen Position ohne den Bedarf für eine zweite Sperrvorrichtung arretiert werden kann.

Automobile mit einem Cabriodach besitzen typischerweise einen Stauraum, in dem das Dach verstaut ist, wenn es vollkommen eingefahren ist. Der Stauraum ist hinter dem Fahrgastraum angeordnet. Der Stauraum kann ein zweckbestimmter Raum sein, der nur für das Verstauen des eingefahrenen Dachs genutzt wird, oder der Stauraum kann zusammenhängend mit oder ein Teil des Kofferraumes sein. Jedenfalls ist es bekannt, eine Heckklappe vorzusehen, die in eine geschlossene Position bewegbar ist, um den Stauraum und den Kofferraum zu verdecken. Die Heckklappe ist in eine vordere Richtung schwenkbar, um Zugang zum Kofferraum zu ermöglichen, und in eine rückwärtige Richtung schwenkbar, um die Bewegung des Daches in und aus dem Stauraum zu ermöglichen.

Es ist wünschenswert, eine Übertotpunkteinrichtung vorzusehen, um die Heckklappe in der geschlossenen Position zu arretieren, um dadurch einen Bedarf für geeignete Sperren oder Verschlüsse für das Arretieren der Heckklappe in der geschlossenen Position zu vermeiden.
Der Erfindung liegt die Aufgabe zugrunde, einen Mechanismus für eine Heckklappe eines Automobils zu schaffen, der die Bewegung der Heckklappe zwischen einer geschlossenen Position, einer ersten offenen Position und einer zweiten offenen Position ermöglicht, ohne dass ein gesonderter Sperrmechanismus für das Halten der Heckklappe in der geschlossenen Position erforderlich ist.

Diese Aufgabe wird mit den Merkmalen des Anspruchs 1 gelöst.

Die Unteransprüche sind auf vorteilhafte Weiterentwicklungen und Ausführungsformen des erfindungsgemäßen Verbindungsmechanismus für eine Heckklappe eines Automobils gerichtet.

Die Vorteile der vorliegenden Erfindung werden unter der Bezugnahme auf die folgende detaillierte Beschreibung in Verbindung mit den Abbildungen leichter erkannt sowie besser verstanden. Es zeigen:
- Fig. 1: eine seitliche Ansicht einer Heckklappenbaugruppe in der geschlossenen Position entsprechend einem Aspekt der Erfindung;
- Fig. 2: eine seitliche Ansicht der Heckklappenbaugruppe in einer ersten offenen Position;
- Fig. 3: eine seitliche Ansicht der Heckklappenbaugruppe in einer zweiten offenen Position;
- Fig. 4 und 5: seitliche Ansichten der Heckklappenbaugruppe in einer Zwischenposition zwischen der geschlossenen Position und der ersten offenen Position;
- Fig. 6: eine seitliche Ansicht eines Teils der Heckklappenbaugruppe in der geschlossenen Position;
- Fig. 7: eine seitliche Ansicht eines Teils der Heckklappenbaugruppe in der offenen Position mit einer Stelleinheit und einer Konsole für die Verbindung der Stelleinheit mit dem Fahrzeug;
- Fig. 8: eine perspektivische Aufsicht auf die Verbindung zwischen einem Vorsprung und einem Aufnahmeteil, einem Teil der Heckklappenbaugruppe in der geschlossenen Position, und
- Fig. 9: eine perspektivische Ansicht einer Führung zum Anordnen eines Verbindungsmechanismus, wenn die Heckklappenbaugruppe in der geschlossenen Position ist.

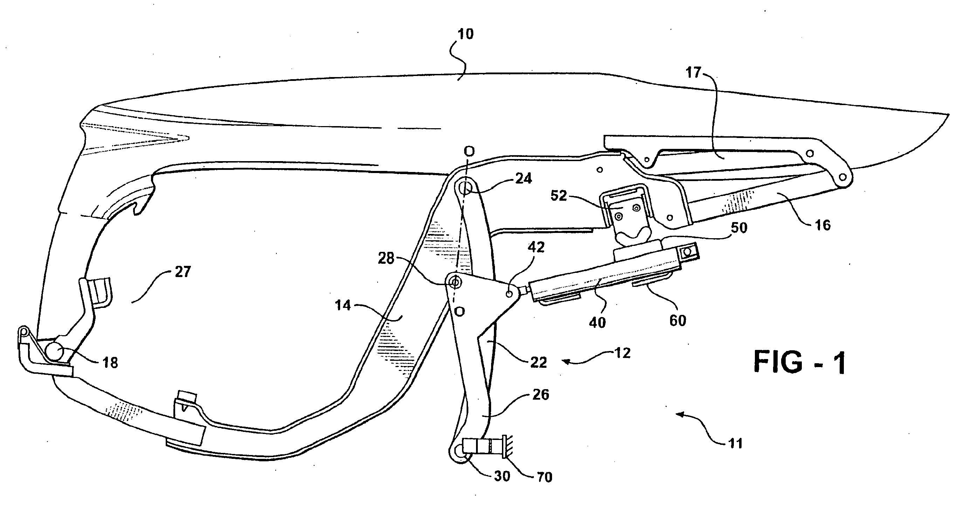

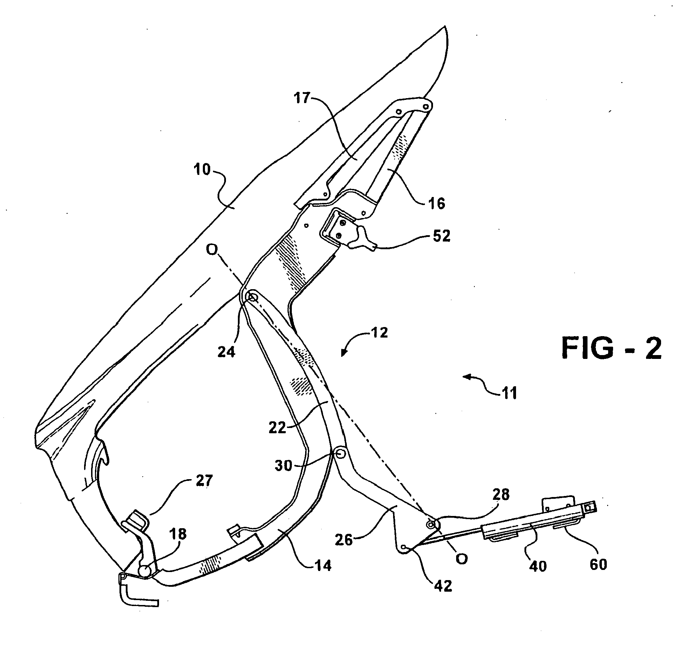

Bezugnehmend auf die Fig. 1 - 5 ist eine Heckklappebaugruppe 11 für das Umschließen eines Stauraums in einem Automobil dargestellt. Die Heckklappenbaugruppe 11 enthält einen Verbindungsmechanismus 12 und eine Heckklappe 10. Der Verbindungsmechanismus, insgesamt mit Bezugsnummer 12 bezeichnet, ist zwischen der Heckklappe 10 und der Karosserie (nicht dargestellt) vorgesehen. Der Verbindungsmechanismus 12 erlaubt die Bewegung der Heckklappe 10 um ein Heckklappengelenk 18 zwischen einer geschlossenen Position, dargestellt in Fig. 1, und einer ersten offenen Position, dargestellt in Fig. 2. In der ersten offenen Position ist die Heckklappe 10 um das Heckklappengelenk 18 in Richtung eines hinteren Endes des Fahrzeuges geneigt, um den Zugang zu dem Stauraum zu ermöglichen oder zu ermöglichen, dass ein Cabriodach eingefahren und darin verstaut werden kann. In der geschlossenen Position ist der Stauraum und der darin befindliche Inhalt, zum Beispiel das Cabriodach, von der Heckklappe 10 verdeckt. Der Verbindungsmechanismus 12, wie später genauer beschrieben, hat eine Übertotpunkteinrichtung, die die Heckklappe ohne den Bedarf für einen gesonderten Sperrmechanismus in der geschlossenen Position zurückhält.

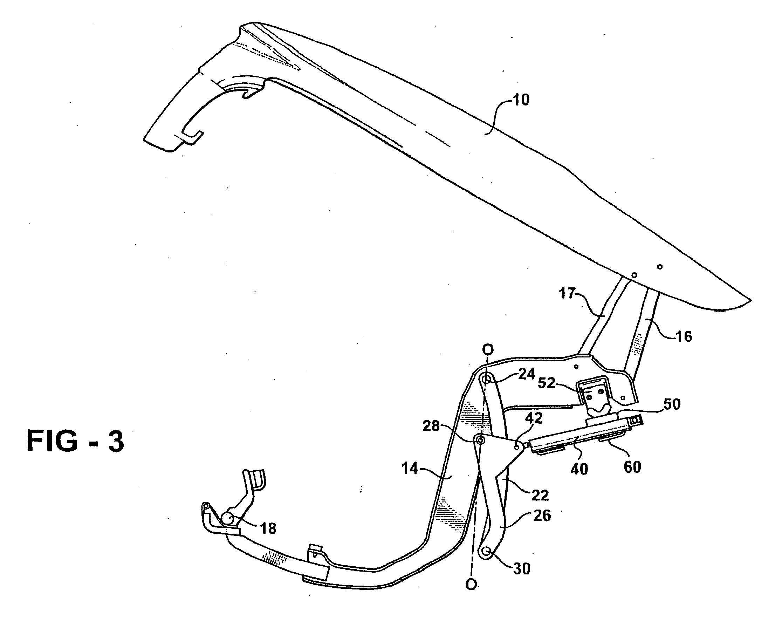

Der Verbindungsmechanismus 12 enthält einen Rahmen 14, der schwenkbar an dem Heckklappengelenk 18 mit dem Fahrzeug verbunden ist. Die Heckklappe 10 wird von dem Rahmen 14 gestützt und bewegt sich mit dem Rahmen 14 um das Heckklappengelenk 18 zwischen der geschlossenen Position und der ersten offenen Position. Alternativ kann das Gelenk zwischen dem Rahmen und der Karosserie durch eine Mehrlenkeranordnung festgelegt werden. Ein vorderes Ende der Heckklappe 10 ist schwenkbar mit dem Rahmen 14 mittels einer Vierstabverbindung 16, 17 für eine unabhängige Bewegung der Heckklappe 10 relativ zum Rahmen 14 zwischen der geschlossenen Position, dargestellt in Fig. 1 und einer zweiten offenen Position, dargestellt in Fig. 3, verbunden. Alternativ können die Heckklappe und der Rahmen anstatt der Vierstabverbindung 16, 17 mit einem einzelnen Gelenk schwenkbar miteinander verbunden sein. In der zweiten offenen Position ist die Heckklappe 10 relativ zum Rahmen 14 in Richtung eines vorderen Endes des Fahrzeuges geneigt, um den Zugang zu dem Stauraum von dem hinteren Ende des Fahrzeuges aus zu ermöglichen. Ein Schließmechanismus 27 ermöglicht es, dass die Heckklappe 10 lösbar an dem Rahmen 14 arretiert wird, so dass die Heckklappe 10 und der Rahmen miteinander um das Heckklappengelenk 18 zwischen der geschlossenen Position und der ersten offenen Position bewegt werden können.

Der Verbindungsmechanismus 12 enthält weiter ein erstes Verbindungsglied 22 und ein zweites Verbindungsglied 26. Das erste Verbindungsglied 22 ist mittels eines ersten Gelenks 24 schwenkbar mit dem Rahmen 14 verbunden. Das zweite Verbindungsglied 26 ist mittels eines zweiten Gelenks 28 schwenkbar mit dem Fahrzeug verbunden. Das erste Verbindungsglied 22 und das zweite Verbindungsglied 26 sind über ein drittes Gelenk 30 schwenkbar miteinander verbunden.

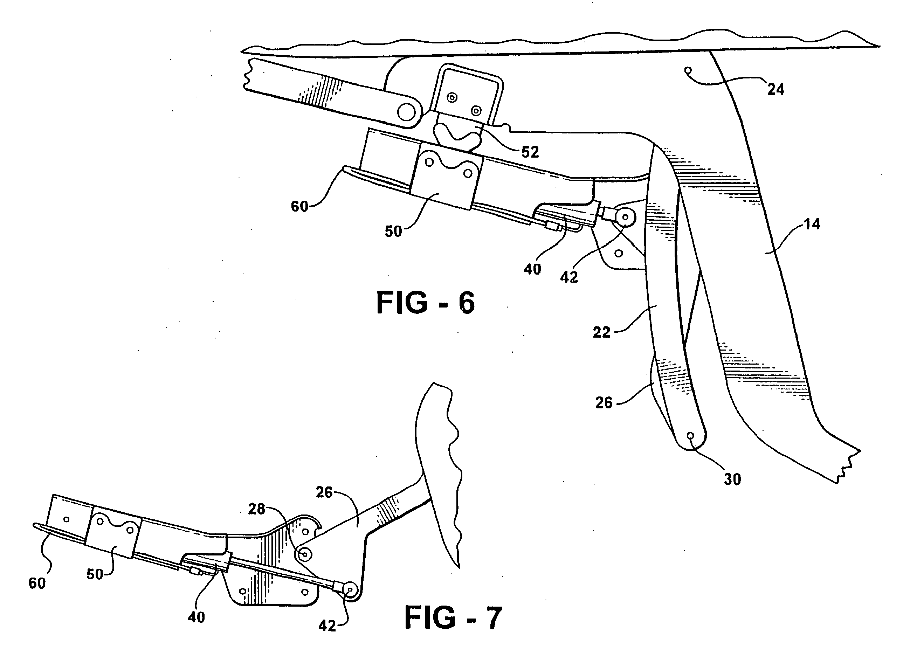

Eine Stelleinheit 40 in Form eines hydraulischen Zylinders ist mittels einer Konsole 60 an dem Fahrzeug montiert. Eine vergrößerte Ansicht des hydraulischen Zylinders und der Konsole 60 ist in Fig. 6 und 7 dargestellt. Ein bewegendes oder stellendes Ende des Zylinders ist schwenkbar mit dem zweiten Verbindungsglied 26 mittels eines Gelenks 42 verbunden, so dass das Verlängern oder Verkürzen der effektiven Länge des Zylinders eine entsprechende Bewegung der Heckklappe zwischen der ersten offenen Position und der geschlossenen Position verursacht. Es sollte von Fachmännern erkannt werden, dass auch andere Typen von Stelleinheiten verwendet werden können. Zum Beispiel kann der Zylinder so konfiguriert sein, dass er den Verbindungsmechanismus zieht anstatt drückt, um die Heckklappe in Richtung der ersten offenen Position zu bewegen. Alternativ kann ein Motor in Drehbauart an eines der Verbindungsglieder des Verbindungsmechanismus gekoppelt sein, um die Heckklappe zwischen der geschlossenen und ersten Offenen Position zu bewegen.

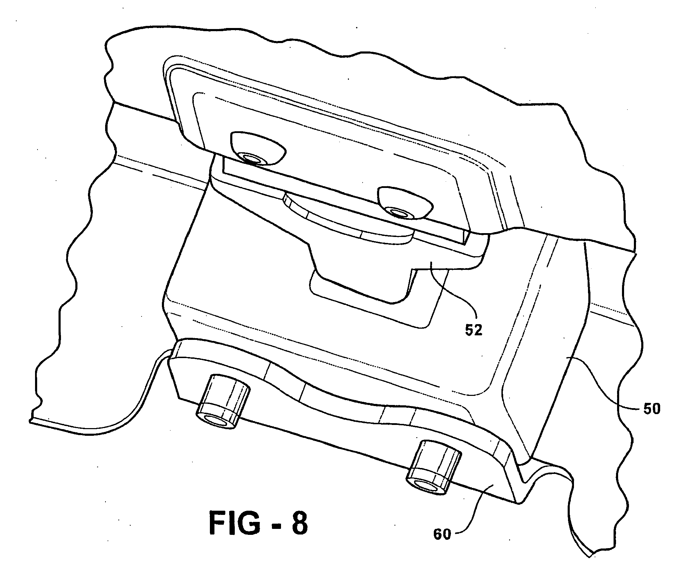

Wie in Fig. 8 dargestellt, ist ein Aufnahmeteil 50 an der Konsole 60 starr befestigt. Ein Vorsprung 52 steht von dem Rahmen 14 hervor. Das Aufnahmeteil 50 erfasst und führt den Vorsprung 52, um die Positionierung der Hecklappe 10 zu unterstützen wenn sich diese in Richtung der geschlossenen Position bewegt.

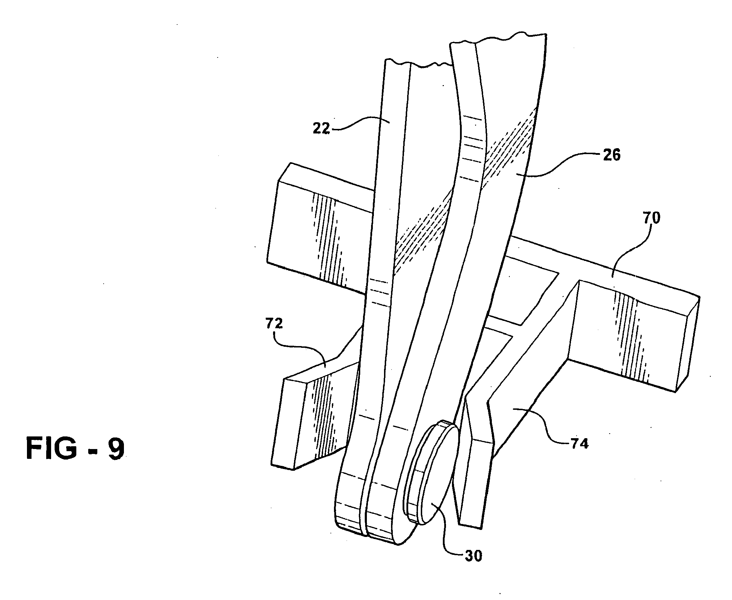

Wie in Fig. 9 dargestellt, ist ein Aufnahmeteil oder eine Führung 70 starr an dem Fahrzeug befestigt und hat in gegenseitigem Abstand angeordnete Arme 72, 74, deren Abstand sich nach außen hin in V-Form aufweitet. Die Verbindungsglieder 22, 26 werden zwischen den Armen 72, 74 geführt, wenn sich die Heckklappe 10 in Richtung der geschlossenen Position bewegt. Die Führung 70 schafft auch Stabilität des Verbindungsmechanismus 12, wenn die Heckklappe 10 in geschlossener Position ist.

Im Gebrauch wird die Heckklappe 10 mittels der Übertotpunkteinrichtung des Verbindungsmechanismus 12 in der geschlossenen Position gehalten. Im Bezug auf Fig. 1 ist eine Übertotpunktlinie O-O durch das erste Gelenk 24 und das zweite Gelenk 28 definiert. Wenn das dritte Gelenk 30 rechts der Übertotpunktlinie O-O in einer Übertotpunktposition positioniert ist, neigen das erste Verbindungsglied 22 und das zweite Verbindungsglied 26 dazu, sich in Gegenuhrzeigerrichtung zu bewegen, falls versucht wird, die Heckklappe 10 aus der geschlossenen Position heraus zu bewegen. Jedoch wird in dieser Position jede Bewegung der Verbindungsglieder 22, 26 gegen den Uhrzeigersinn durch die Führung 70 beschränkt. Alternativ kann die Stelleinheit eine Bewegung der Verbindungsglieder 22, 26 gegen den Uhrzeigersinn beschränken, wenn die Heckklappe 10 in geschlossener Position ist. Alternativ kann an einem oder beiden Verbindungsgliedern 22, 26 ein Flansch ausgebildet sein, um einen Anschlag zu schaffen, der die Bewegung der Verbindungsglieder 22, 26 gegen den Uhrzeigersinn beschränkt, während die Heckklappe 10 in geschlossener Position ist.

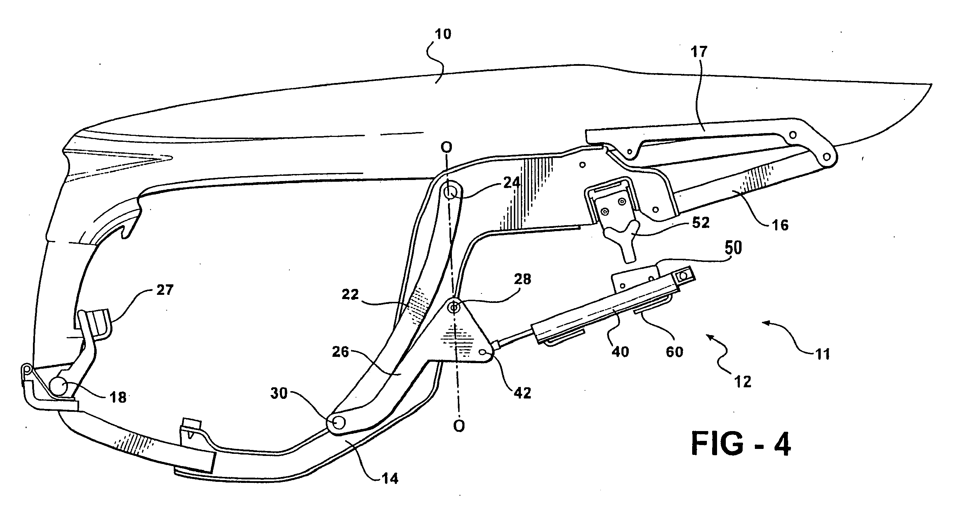

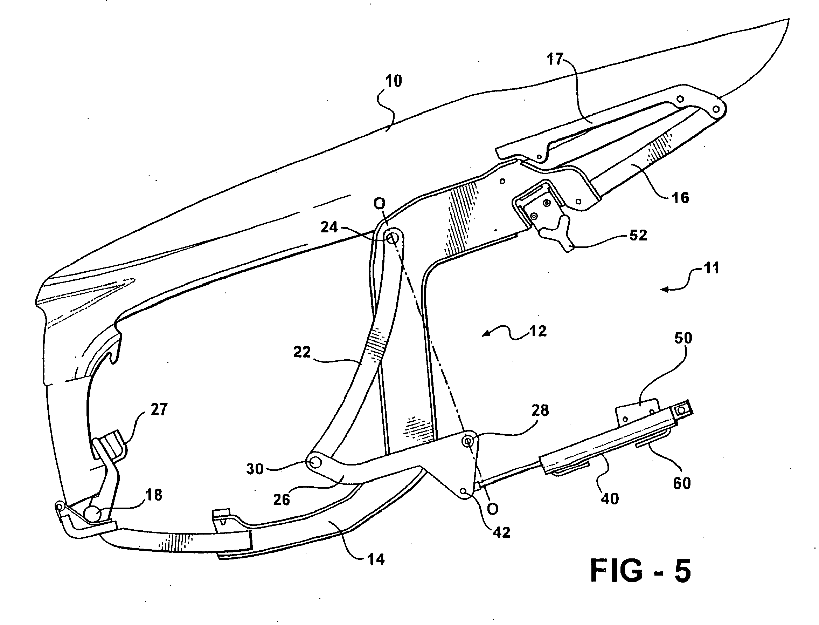

Die Heckklappe 10 wird durch Ausfahren der Stelleinheit 40 von der geschlossenen Position (Fig. 1) in Richtung der ersten offenen Position (Fig. 2) bewegt. Die Stelleinheit 40 wirkt längs einer Linie im Wesentlichen senkrecht zu der Übertotpunktlinie O-O, wenn die Heckklappe 10 in geschlossener Position ist. Die Darstellungen der Zwischenpositionen der Heckklappe 10 in Fig. 4 und 5 zeigen, dass das zweite Verbindungsglied 26 um das zweite Gelenk 28 im Uhrzeigersinn dreht, wenn die Stelleinheit 40 ausgefahren wird. Die Heckklappe 10 und der Rahmen 14 beginnen, sich zusammen um das Heckklappengelenk 18 aus der geschlossenen Position zu drehen, wenn das dritte Gelenk 30 sich nach links der Übertotpunktlinie O-O, die durch das erste Gelenk 24 und das zweite Gelenk 28 definiert ist, bewegt. Die Heckklappe 10 und der Rahmen 14 verbleiben in der ersten Position (Fig. 2), wenn die Stelleinheit 40 in ihrer vollständig ausgefahrenen Position gehalten wird. In der ersten offenen Position kann der Stauraum von einem Benutzer erreicht werden oder kann ein eingefahrenes Cabriodach in sich aufnehmen. Optional können die Verbindungsglieder 22,26 und die Stelleinheit 40 so konfiguriert sein, dass sie eine zweite Übertotpunktposition haben, um die Heckklappe in der ersten offenen Position (siehe Fig. 2) zu halten, wobei das dritte Gelenk 30 dann an der rechten Seite der Übertotpunktlinie O-O angeordnet ist (nicht dargestellt). Ein Flansch kann an der Konsole 60 und/oder an einem der Verbindungsglieder 22, 26 neben dem dritten Gelenk 30 angeordnet sein, um einen festen Anschlag für eine oder beide der geschlossenen und ersten offenen Position festzulegen. Die Heckklappe 10 kann unter Umkehr der vorgenannten Schritte in die geschlossene Position zurückbewegt werden.

Alternativ können die Verbindungsglieder 22, 26 miteinander mittels eines Mehrlenkerverbindungsmechanismus anstatt des einzelnen dritten Gelenks 30 schwenkbar verbunden werden. In diesem Fall würde der Mehrlenkerverbindungsmechanismus generell in und aus der Übertotpunktposition, wie oben beschrieben, bewegbar sein. Zumindest ein Gelenk des Mehrlenkerverbindungsmechanismus würde in und aus der Übertotpunktposition bewegbar sein, um die Übertotpunkteinrichtung zu bilden.

Die Erfindung wurde in veranschaulichender Weise beschrieben. Es ist daher so zu verstehen, dass die angewandte Terminologie eher beschreibenden Charakter hat als beschränkenden Charakter. Viele Modifikationen und Variationen der Erfindung sind angesichts des oben Aufgezeigten möglich. Beispielsweise kann die Ausrichtung des Verbindungsmechanismus umgedreht werden, so dass die Heckklappe relativ zum Rahmen in Richtung des hinteren Endes des Fahrzeuges in eine erste offene Position bewegt werden kann während der Rahmen fix am Fahrzeug bleibt. In dieser Anordnung wäre die Heckklappe dann zusammen mit dem Rahmen in Richtung des vorderen Endes des Fahrzeuges in die zweite offene Position bewegbar, um den Zugang zum Kofferraum vom hinteren Ende des Fahrzeuges zu ermöglichen. Eine andere Alternative ist die Ausführung einer rahmenlosen Heckklappe, ausgestattet mit einem Verbindungsmechanismus, um die Bewegung der Heckklappe zwischen einer geschlossenen Position und einer offenen Position zu ermöglichen. Somit kann die Erfindung, anders als speziell beschrieben, innerhalb des Umfanges der angefügten Ansprüche genutzt werden.

## Patentansprüche

1. Heckklappenbaugruppe (11) für den Gebrauch an Automobilen, enthaltend:
eine Heckklappe (10) zum Verdecken eines Stauraums in dem Fahrzeug; und
einen zwischen der Heckklappe (10) und dem Fahrzeug angeordneten Verbindungsmechanismus (12)zum Bewegen der Heckklappe (10) zwischen einer geschlossenen Position, in der der Stauraum verdeckt ist, einer ersten offenen Position, die den Zugang zum Stauraum über eine erste Seite des Stauraums ermöglicht und einer zweiten offenen Position, die den Zugang zum Stauraum über eine zweite Seite des Stauraums, die der ersten Seite gegenüberliegt, wobei der Verbindungsmechanismus (12) in eine Übertotpunktposition bewegbar ist, um die Bewegung der Heckklappe (10) von der geschlossenen Position entweder zu der ersten oder der zweiten offenen Position zu verhindern.

2. Heckklappenbaugruppe (11) nach Anspruch 1, mit einer mit dem Verbindungsmechanismus (12) verbundenen Stelleinheit (40), um die Heckklappe (10) zwischen der geschlossenen Position und zumindest einer der ersten und zweiten offenen Position zu bewegen.

3. Heckklappenbaugruppe (11) nach Anspruch 2, wobei die Stelleinheit (40) eine lineare hydraulische Stelleinheit ist.

4. Heckklappenbaugruppe (11) nach Anspruch 2 oder 3, weiter enthaltend:
einen Rahmen (14), der zumindest einen Teil der Heckklappe (10) stützt, wobei
die Stelleinheit (40) für das Bewegen der Heckklappe (10) gemeinsam mit dem Rahmen (14) zwischen der geschlossenen Position und der ersten offenen Position, angeordnet ist, und
der Verbindungsmechanismus (12) ein erstes Verbindungsglied (22), das an einem ersten Gelenk (24) schwenkbar mit dem Rahmen (14) verbunden ist und ein zweites Verbindungsglied (26), das an einem zweiten Gelenk (28) schwenkbar mit dem Fahrzeug verbunden ist, hat,
das erste und zweite Verbindungsglied (22, 26) an einem dritten Gelenk (30) schwenkbar miteinander verbunden sind,
das erste und zweite Gelenk (24, 28) eine Übertotpunktlinie für das dritte Gelenk (30) definieren, eines des ersten und zweiten Verbindungsgliedes (22, 26) mit der Stelleinheit (40) verbunden ist, um die Bewegung des Verbindungsmechanismus (12) in eine erste Richtung während der Bewegung der Heckklappe (10) und des Rahmens (14) von der geschlossenen Position in die erste offene Position und in eine entgegengesetzte zweite Richtung während der Bewegung der Heckklappe (10) und des Rahmens (14) von der ersten offenen Position in die geschlossene Position zu ermöglichen,
das dritte Gelenk (30) von der Übertotpunktposition auf der einen Seite der Übertotpunktlinie zu der gegenüberliegenden Seite der Übertotpunktlinie bewegbar ist, während der Verbindungsmechanismus (12) in die erste Richtung in Richtung der ersten offenen Position bewegt wird, und
die Bewegung des Verbindungsmechanismus (12) in die zweite Richtung beschränkt ist, wenn das dritte Gelenk (30) in der Übertotpunktposition ist, um zu unterstützen, dass die Heckklappe (10) und der Rahmen (14) in der geschlossenen Position verbleiben.

5. Heckklappenbaugruppe (11) nach Anspruch 4, wobei die Heckklappe (10) relativ zu dem Rahmen (14) zwischen der geschlossenen Position und der zweiten offenen Position unabhängig bewegbar ist.

6. Heckklappenbaugruppe (11) nach Anspruch 4 oder 5, wobei die Heckklappe (10) zumindest mit einem vierstabverbindungsmechanismus mit dem Rahmen (14) verbunden ist, um die Hecklappe (10) relativ zu dem Rahmen (14) zwischen der geschlossenen Position und der zweiten offenen Position zu bewegen.

7. Heckklappenbaugruppe (11) nach einem der Ansprüche 4 bis 6, wobei das dritte Gelenk (30) in eine zweite Übertotpunktposition bewegbar ist, um die Heckklappe (10) und den Rahmen (14) in der ersten offenen Position zu halten.

8. Heckklappenbaugruppe (11) nach einem der Ansprüche 4 bis 7, wobei die Übertotpunktlinie in der geschlossenen Position im Wesentlichen vertikal ist.

9. Heckklappenbaugruppe (11) nach einem der Ansprüche 4 bis 9, wobei das erste und zweite verbindungsglied (22, 26) sowohl in der offenen als auch in der geschlossenen Position insgesamt parallel sind.

10. Heckklappenbaugruppe (11) nach einem der Ansprüche 4 bis 9, wobei die Stelleinheit (40) sich entlang einer Linie, die insgesamt senkrecht zu der Übertotpunktlinie ist, verlängert und verkürzt.

11. Heckklappenbaugruppe (11) nach einem der Ansprüche 4 bis 10, mit einer in der geschlossenen Position angrenzend an die Verbindungsglieder angeordneten Führung (70), um die Bewegung des Verbindungsmechanismus (12) in die zweite Richtung zu beschränken.

12. Heckklappenbaugruppe (11) nach Anspruch 11, wobei die Führung (70) in gegenseitigem Abstand angeordnete Arme (72, 74) aufweist, die den Verbindungsmechanismus (12), während der Rahmen (14) und die Heckklappe (10) sich in Richtung der geschlossenen Position bewegen, zwischen sich führen.

13. Heckklappenbaugruppe (11) nach einem der Ansprüche 4 bis 12, mit einer Konsole (60), die die Stelleinheit (40) starr an dem Fahrzeug befestigt und ein Aufnahmeteil (50) trägt, das einen Vorsprung (52) des Rahmens (14) aufnimmt, um die Heckklappe (10) relativ zu dem Fahrzeug in der geschlossenen Position zu arretieren.
